**Europäisches Patentamt**

**European Patent Office**

**Office européen des brevets**

(11) Veröffentlichungsnummer: **0 289 839 B1**

# EUROPÄISCHE PATENTSCHRIFT

(45) Veröffentlichungstag der Patentschrift: **25.09.91**

(51) Int. Cl.⁵: **C01B 25/163**

(21) Anmeldenummer: **88106102.2**

(22) Anmeldetag: **16.04.88**

(54) Verfahren zur Reinigung von phosphoriger Säure.

(30) Priorität: **02.05.87 DE 3714657**

(43) Veröffentlichungstag der Anmeldung:
**09.11.88 Patentblatt 88/45**

(45) Bekanntmachung des Hinweises auf die
Patenterteilung:
**25.09.91 Patentblatt 91/39**

(84) Benannte Vertragsstaaten:
**BE CH DE FR GB IT LI NL**

(56) Entgegenhaltungen:
**DE-A- 2 324 859**
**DE-B- 2 200 653**
**DE-C- 2 204 929**

(73) Patentinhaber: **HOECHST AKTIENGESELL-
SCHAFT**
**Postfach 80 03 20**
**W-6230 Frankfurt am Main 80(DE)**

(72) Erfinder: **Grosse, Jürgen, Dr.**
**Blankenheimer Weg 33**
**W-5042 Erftstadt(DE)**
Erfinder: **Schimmel, Günther, Dr.**
**Ehrenstrasse 16**
**W-5042 Erftstadt(DE)**
Erfinder: **Hofmann, Bernhard, Dr.**
**Merziger Weg 1a**
**W-6000 Frankfurt(DE)**

## Beschreibung

Die vorliegende Erfindung betrifft ein Verfahren zur Reinigung von bei Halogenierungen von Kohlenwasserstoffderivaten mit Phosphortrihalogeniden anfallender phosphoriger Säure im Rahmen der Herstellung von phosphoriger Säure durch Umsetzen des mit Hilfe von Wasserdampf feinverteilten Gemisches von Phosphortrichlorid und Wasser bei Temperaturen zwischen 150 und 200° C in der Gasphase in einer Reaktionszone, wobei das flüssige Reaktionsprodukt zur Aufkonzentrierung in eine Verdampfungszone abläuft, welcher eine erste Abscheidezone nachgeschaltet ist, in deren unteren Bereich Inertgas eingeleitet wird und aus welcher Schmelze in eine Kristallisationszone abgezogen wird und wobei die Abgase aus der Reaktionszone in einer zweiten Abscheidezone mit einer Waschflüssigkeit behandelt werden, bevor sie in die Atmosphäre geleitet werden.

Aus der US-A-3 859 419 ist es bekannt, zur Herstellung von phosphoriger Säure Phosphortrichlorid und Wasser gemeinsam mit Wasserdampf zu zerstäuben und unter inniger Vermischung in einen Reaktor einzubringen, in welchem sich die Komponenten bei Temperaturen zwischen 150 und 200° C in der Gasphase umsetzen. Das flüssige Reaktionsprodukt gelangt aus dem Reaktor in einen Verdampfer, in welchem es aufkonzentriert wird, wobei die anfallenden Abgase in einen als Rückflußkolonne ausgebildeten Abscheider gelangen, in welchem sie mit einer Waschflüssigekeit behandelt werden. Die am Boden das Verdampfers austretende Schmelze wird in einer nachgeschalteten Abstreifkolonne mit einem Inertgas ausgeblasen, bevor sie in einem Kristallisator zu phosphoriger Säure in Schuppenform verfestigt wird.

Bei der Verwendung von Phosphortrichlorid zur Halogenierung von Kohlenwasserstofderivaten fällt eine mit organischen Bestandteilen verunreinigte und teilweise kondensierte phosphorige Säure an, die in dieser Form keiner Weiterverwendung zugeführt werden kann.

Es ist daher Aufgabe der vorliegenden Erfindung, ein Verfahren anzugeben, mit welchem die bei der Halogenierung von Kohlenwasserstoffderivaten mit Phosphortrihalogeniden anfallende phosphorige Säure in einfacher Weise gereinigt werden kann. Das wird im Rahmen der Herstellung von phosphoriger Säure durch Umsetzen von Phosphortrichlorid mit Wasser in einer Reaktionszone und Behandeln der die Reaktionszone verlassenden Abgase in einer Abscheidezone mit einer Waschflüssigkeit erfindungsgemäß dadurch erreicht, daß man als Waschflüssigkeit eine wäßrige Lösung von verunreinigter phosphoriger Säure verwendet.

Das Verfahren gemäß der Erfindung kann weiterhin wahlweise auch noch dadurch ausgestaltet sein, daß

a) die wäßrige Lösung der verunreinigten phosphorigen Säure durch Hydrolyse und Strippung vorgereinigt wird;

b) man die verunreinigte phosphorige Säure mit 5 bis 80 Gewichts%, vorzugsweise 36 bis 60 Gewichts%, Wasser vermischt, 0,5 bis 5 Stunden, vorzugsweise 1 bis 3 Stunden, bei Temperaturen von 50 bis 100° C rührt und anschließend 0,5 bis 2 Stunden mit Inertgas ausbläst;

c) als Inertgas Stickstoff dient;

d) man die hydrolysierte und gestrippte phosphorige Säure von einem auf ihr aufschwimmenden Ölfilm abtrennt;

e) die Waschflüssigkeit 4 bis 90 Gewichts% $H_3PO_3$ enthält;

f) man 0,1 bis 0,35 kg/h Waschflüssigkeit pro kg/h umgesetztes Phosphortrichlorid verwendet.

Mit dem erfindungsgemäßen Verfahren wird eine phosphorige Säure erhalten, welche bezüglich ihrer Gehalte an $H_3PO_3$, $H_3PO_4$, Chlorid, Eisen und organischen Bestandteilen im wesentlichen mit nach dem Stand der Technik hergestellter phosphoriger Säure (Analyse: 99,3 % $H_3PO_4$; 0,3 % $H_3PO_4$; 7 ppm Chlorid; 2 ppm Eisen und höchstens 150 ppm organischer Kohlenstoff) übereinstimmt.

Beispiel 1 (Vezgleichsbeispiel)

Bei der Chlorierung von Carbonsäuren mit Phosphortrichlorid angefallene, verunreinigte, teilweise kondensierte phosphorige Säure (108,5 % $H_3PO_3$; 0,3 % $H_3PO_4$; 0,65 % Chlorid; 0,48 % organischer Kohlenstoff) wurde mit 50 Gew.-% Wasser 2 Stunden bei 75° C gerührt und anschließend unter Durchleiten von Stichstoff 1 Stunde lang bei der gleichen Temperatur kräftig ausgeblasen. Schließlich wurde die hydrolysierte phosphorige Säure durch Dekantieren von einem dünnen, oben aufschwimmenden Ölfilm abgetrennt.
Die resultierende wäßrige Lösung enthielt 75,5 % $H_3PO_3$; 0,2 % $H_3PO_4$; 0,015 % Chlorid und 0,2 % organischen Kohlenstoff.

Beispiel 2 (gemäß der Erfindung)

In einen Reaktor wurden durch eine Zweistoffdüse 156 kg/h Phosphortrichlorid und 50 l/h Wasser eingespeist und beides gleichzeitig durch Dampf verdüst und aufgeheizt. Die Temperatur im Reaktor schwankte dabei zwischen 170 und 180° C. Das aus dem Reaktor zur Aufkonzentrierung in einen Verdampfer ablaufende flüssige Reaktionsprodukt wurde mit Hilfe einer Heizkerze im Verdampfer auf 210° C gehalten. In dem dem Verdampfer nachgeschalteten ersten Abscheider wurden restliches Wasser und restlicher Chlorwasserstoff aus der $H_3PO_3$-Schmelze entfernt, indem Stickstoff in den unteren Bereich des ersten Abscheiders eingeleitet wurde. Die aus dem ersten Abscheider ablaufende $H_3PO_3$-Schmelze wurde einem Kristallisator zugeführt, aus dem sie als geschupptes Material austrat.

Die Abgase aus der Reaktionszone wurden in einem zweiten Abscheider im Gegenstrom mit 40 kg/h der wäßrigen Lösung gemäß Beispiel 1 als Waschflüssigkeit behandelt.

Es wurden 119 kg/h einer phosphorigen Säure mit 99,3 % $H_3PO_3$; 0,3 % $H_3PO_4$; 9 ppm Chlorid; 5 ppm Eisen und weniger als 150 ppm organischem Kohlenstoff erhalten.

Beispiel 3 (gemäß der Erfindung)

Beispiel 2 wurde mit der Änderung wiederholt, daß als Waschflüssigkeit 53 kg/h der wäßrigen Lösung gemäß Beispiel 1 verwendet wurden.

Es wurden 123 kg/h einer phosphorigen Säure mit 99,3 % $H_3PO_3$; 0,3 % $H_3PO_4$; 8 ppm Chlorid; 6 ppm Eisen und weniger als 150 ppm organischem Kohlenstoff erhalten.

Beispiel 4 (Vergleichbeispiel)

Beispiel 2 wurde mit der Änderung wiederholt, daß als Waschflüssigkeit 65 kg/h der wäßrigen Lösung gemäß Beispiel 1 verwendet wurden.

Es wurden zwar 126 kg/h einer phosphorigen Säure mit 99,3 % $H_3PO_3$; 0,3 % $H_3PO_4$; 7 ppm Chlorid; 6 ppm Eisen und weniger als 150 ppm organischem Kohlenstoff erhalten; jedoch kam es im zweiten Abscheider zu Refluxiererscheinungen, wodurch ein Teil der Waschflüssigkeit direkt in die nachgeschaltete HCl-Waschkolonne übergetrieben wurde.

**Patentansprüche**

1. Verfahren zur Reinigung von bei Halogenierungen von Kohlenwasserstoffderivaten mit Phosphortrihalogeniden anfallender phosphoriger Säure im Rahmen der Herstellung von phosphoriger Säure durch Umsetzen des mit Hilfe von Wasserdampf feinverteilten Gemisches von Phosphortrichlorid und Wasser bei Temperaturen zwischen 150 und 200 °C in der Gasphase in einer Reaktionszone, wobei das flüssige Reaktionsprodukt zur Aufkonzentrierung in eine Verdampfungszone abläuft, welcher eine erste Abscheidezone nachgeschaltet ist, in deren unteren Bereich Inertgas eingeleitet wird und aus welcher Schmelze in eine Kristallisationszone abgezogen wird und wobei die Abgase aus der Reaktionszone in einer zweiten Abscheidezone mit einer Waschflüssigkeit behandelt werden, bevor sie in die Atmosphäre geleitet werden, dadurch gekennzeichnet, daß man als Waschflüssigkeit eine wäßrige Lösung von verunreinigter phosphoriger Säure verwendet.

2. Verfahren nach Anspruch 1, dadurch gekennzeichnet, daß die wäßrige Lösung der verunreinigten phosphorigen Säure durch Hydrolyse und Strippung vorgereinigt wird.

3. Verfahren nach Anspruch 1 oder 2, dadurch gekennzeichnet, daß man die verunreinigte phosphorige Säure mit 5 bis 80 Gewichts%, vorzugsweise 36 bis 60 Gewichts%, Wasser vermischt, 0,5 bis 5 Stunden, vorzugsweise 1 bis 3 Stunden, bei Temperaturen von 50 bis 100 °C rührt und anschließend 0,5 bis 2 Stunden mit Inertgas ausbläst.

4. Verfahren nach Anspruch 3, dadurch gekennzeichnet, daß als Inertgas Stickstoff dient.

5. Verfahren nach Anspruch 3 oder 4, dadurch gekennzeichnet, daß man die hydrolysierte und gestrippte phosphorige Säure von einem auf ihr aufschwimmenden Ölfilm abtrennt.

6. Verfahren nach mindestens einem der Ansprüche 1 bis 5, dadurch gekennzeichnet, daß die Waschflüssigkeit 4 bis 90 Gewichts% $H_3PO_3$ enthält.

7. Verfahren nach mindestens einem der Ansprüche 1 bis 6, dadurch gekennzeichnet, daß man 0,1 bis 0,35 kg/h Waschflüssigkeit pro kg/h umgesetztes Phosphortrichlorid verwendet.

**Claims**

1. A process for the purification of phosphorous acid which is formed in halogenations of hydrocarbon derivatives with phosphorus trihalides during the preparation of phosphorous acid, by reacting the mixture of phosphorus trichloride and water finely divided by means of steam at temperatures between 150 and 200 °C in the gas phase in a reaction zone, the liquid reaction product being drained into a concentrating evaporation zone which is followed on the downstream side by a first separation zone, into the lower part of which inert gas is introduced and from which a melt is withdrawn into a crystallization zone; and the waste gases from the reaction zone being treated with a washing liquid in a second separation zone before they are passed into the atmosphere, which comprises using an aqueous solution of never-purified phosphorous acid as washing liquid.

2. The process as claimed in claim 1, wherein the aqueous solution of never-purified phosphorous acid is prepurified by hydrolysis and stripping.

3. The process as claimed in claim 1 or 2, wherein the never-purified phosphorous acid is mixed with 5 to 80% by weight, preferably 36 to 60% by weight, of water, and the mixture is stirred for 0.5 to 5 hours, preferably 1 to 3 hours, at temperatures from 50 to 100°C and is subsequently purged with inert gas for 0.5 to 2 hours.

4. The process as claimed in claim 3, wherein nitrogen is used as the inert gas.

5. The process as claimed in claim 3 or 4, wherein the hydrolyzed and stripped phosphorous acid is separated off from an oily film floating on top of it.

6. The process as claimed in at least one of claims 1 to 5, wherein the washing liquid contains 4 to 90% by weight of $H_3PO_3$.

7. The process as claimed in at least one of claims 1 to 6, wherein 0.1 to 0.35 Kg/h of washing liquid is used per kg/h of reacted phosphorus trichloride.

**Revendications**

1. Procédé pour la purification d'acide phosphoreux se formant dans les halogénations de dérivés d'hydrocarbures par les trihalogénures de phosphore dans le cadre de la fabrication d'acide phosphoreux par réaction en phase gazeuse, dans une zone de réaction à des températures entre 150 et 200°C, du mélange de tri-chlorure de phosphore et d'eau finement divisé au moyen de vapeur d'eau, le produit de réaction liquide s'écoulant pour sa concentration dans une zone d'évaporation, à la suite de laquelle est branchée une première zone de séparation, dans la partie inférieure de laquelle on envoie un gaz inerte et à partir de laquelle on pré-lève la masse fondue dans une zone de cristallisation et les gaz résiduaires provenant de la zone de réaction étant traités dans une seconde zone de séparation par un liquide de lavage avant d'être envoyés dans l'atmosphère, caractérisé en ce que l'on utilise comme liquide de lavage une solution aqueuse d'acide phosphoreux contaminé.

2. Procédé selon la revendication 1, caractérisé en ce que la solution aqueuse de l'acide phosphoreux contaminé est préalablement purifiée par hydrolyse et stripage.

3. Procédé selon la revendication 1 ou 2, caractérisé en ce que l'on mélange l'acide phosphoreux contaminé avec 5 à 80 % en poids, de préférence 36 à 60 % en poids, d'eau, on agite à des températures de 50 à 100°C pendant 0,5 à 5 h, de préférence 1 à 3 h, et ensuite on le purge par un gaz inerte pendant 0,5 à 2 h.

4. Procédé selon la revendication 3, caractérisé en ce que l'on utilise l'azote comme gaz inerte.

5. Procédé selon la revendication 3 ou 4, caractérisé en ce que l'on sépare l'acide phosphoreux hydrolysé et stripé d'un film huileux flottant à sa surface.

6. Procédé selon l'une au moins des revendications 1 à 5, caractérisé en ce que le liquide de lavage contient 4 à 90 % en poids de $H_3PO_3$.

7. Procédé selon l'une au moins des revendications 1 à 6, caractérisé en ce que l'on utilise 0,1 à 0,35 kg/h de liquide de lavage par kg/h de trichlorure de phosphore ayant réagi.